# EUROPEAN PATENT SPECIFICATION

(11) **EP 1 607 282 B1**
(45) Date of publication and mention of the grant of the patent: **19.03.2008**
(21) Application number: 05009043.0
(22) Date of filing: 25.04.2005
(51) Int. Cl.: B60R 21/26

(54) **Inflator and airbag apparatus**
Gasgenerator und Gassackvorrichtung
Générateur de gaz et dispositf de sac gonflable

(30) Priority: 14.06.2004 JP 2004175685
(43) Date of publication of application: 21.12.2005
(73) Proprietor: TAKATA CORPORATION, Minato-ku, Tokyo 106-8510 (JP)
(72) Inventor: Yano, Kanji c/o Takata Corporation, Tokyo 106-8510 (JP); Nishimura, Jun c/o Takata Corporation, Tokyo 106-8510 (JP)
(74) Representative: Vossius & Partner

(56) References cited:
- US-A- 3 770 387
- US-A- 3 817 263
- US-A- 6 095 556
- US-A1- 2004 222 620
- US-B1- 6 382 668

## Description

The present invention relates to an inflator used in an airbag apparatus etc., and in particular, to a hybrid inflator constructed to release a gas generated from gas-generating chemicals and a pressurized gas stored. In addition, the present invention relates to an airbag apparatus using the inflator.

A hybrid inflator includes a gas generator containing gas-generating chemicals ignited by an initiator; and a tank charged with a pressurized gas. When the chemicals start to react by the initiator, the reaction gas flows into the tank. Then, a sealing plate separating the tank and a gas outlet is ruptured, and a mixed gas of a gas stored in the tank (hereinafter referred to as stored gas) and the reaction gas is released from the gas outlet.

JP-A-2003-81050 (Patent Document 1) discloses an inflator in which one end of a cylindrical tank is coupled to a gas generator by welding, and a gas outlet is provided at the other end of a gas storage chamber.

I. In the inflator of JP-A-2003-81050, the distance between a welded part between the tank and the gas generator and the chemicals in the gas generator is short. Therefore, it is required to perform a welding so as not to ignite the chemicals from the heat generated during the welding. This makes the manufacturing operation of the inflator more difficult and also makes the manufacturing cost of the inflator more expensive.

US-B1-6 382 668 relates to an inflator for inflating a vehicle occupant protection device comprising a vessel containing stored gas and ignitable material according to the preamble of claim 1. The vessel has a portion that provides a first opening for fluid to flow from the vessel when the pressure in the vessel reaches a predetermined pressure. The inflator also comprises an igniter for igniting the ignitable material and increasing the pressure in the vessel, and a control part upstream of the portion for controlling fluid flow to the first opening.

US-A-3 817 263 relates to a device for inflating safety cushions in a vehicle having an electrically ignitable cartridge provided with a pyrotechnical mixture free of brisant or high explosive within a cartridge casing of low strength material. The cartridge casing material is of a low strength so as to prevent the cartridge casing acting as a tamp for accommodating inadvertent detonation of the cartridge by itself. The cartridge is arranged within a pressure tank equipped with a liquid gas in communication with the interior of a safety cushion by means of an extension having at least one gas passage aperture, which extension is sealed with respect to the liquid gas by a bursting or rupturing diaphragm.

US-A-3 770 383 relates to an apparatus comprising a gas generating device, protective inflatable restraint assembly, a removable plug retaining said gas in said source, detonator means for removing the plug and an interior deflector covering the opening communicating to the manifold and bag assembly in said gas generating device.

US-A-6 095 556 relates to an inflator for a vehicle inflatable safety system comprising a housing configured to obtain a gas generating material, an igniting assembly and an activating assembly. The igniting assembly includes an actuator plate that is configured to ignite the gas generating material contained in the housing and backer plate. The backer plate is attached to the housing such that a seal is formed therebetween that is capable of substantially stopping the flow of the gas generated by the gas generating material in any direction other than the predetermined directions. The activating assembly is connected to the housing and comprises a projectile that is configured to impact the actuator piston of said actuator plate so as to cause the actuator plate to move into impacting engagement with the percussion primers to ignite the ignition charge and thereby the gas generating material.

It is a first object of the present invention to provide an inflator that is easy to manufacture.

II. In JP-A-2003-81050, it is evident that the gas is charged in the tank after the welding operation between the tank and the gas generator is completed from the fact that the opening at one end of the tank is welded directly to the gas generator. Like this, in the case of the inflator in which the gas is charged after the tank and the gas generator is coupled to each other by welding, it is necessary to install a gas-charging facility in the assembling process of the inflator, and thus the assembling cost of the inflator becomes high.
It is a second object of the present invention to provide an inflator that is constructed by coupling a tank previously changed with a gas and a gas generator.

These objects are achieved with the features of the claims.

An airbag apparatus of the present invention includes the inflator of the present invention and an airbag expanded by the gas from the inflator.

In the inflator of the present invention, the tank and the gas generator are coupled to each other by the coupling mechanisms provided in both of them. Thus, the welding operation is required to couple both the tank and gas generator to each other.

In the inflator of the present invention, a nozzle protrudes from the gas generator, and the front end of the nozzle is welded to the tank. Thus, the distance between the welded part and the chemicals in the gas generator is long. Therefore, most of welding heat is not transferred to the chemicals, and the welding operation becomes easy, and the manufacturing efficiency of the inflator improves.

In the inflator, the gas generator and the tank previously charged with the gas are preferably coupled to each other. Therefore, various output characteristics can be obtained by preparing plural types of tanks having different gas pressures or capacities and plural types of gas generators having different gas-generating characteristics, and changing the combination of them. In this case, a gas-charging facility is not required in the assembling process of an inflator, and the assembling cost of the inflator becomes low.

Hereinafter, embodiments of the present invention will be now described with reference to accompanying drawings.
Fig. 1 is a longitudinal sectional view of an inflator according to an embodiment not part of the invention. (a) illustrates a state in which the gas generator and the tank are not yet coupled to each other, and (b) illustrates a state in which the gas generator and the tank are coupled to each other.
Fig. 2 is a longitudinal sectional view of an inflator according to another embodiment not part of the invention. (a) illustrates a state in which a gas generator and a tank are not yet coupled, and (b) illustrates a state in which the gas generator and the tank are coupled.
Fig. 3 is a longitudinal sectional view of an inflator according to still another embodiment. a) illustrates a state in which a gas generator and a tank are not yet coupled to each other, and (b) illustrates a state in which the gas generator and the tank are coupled to each other.

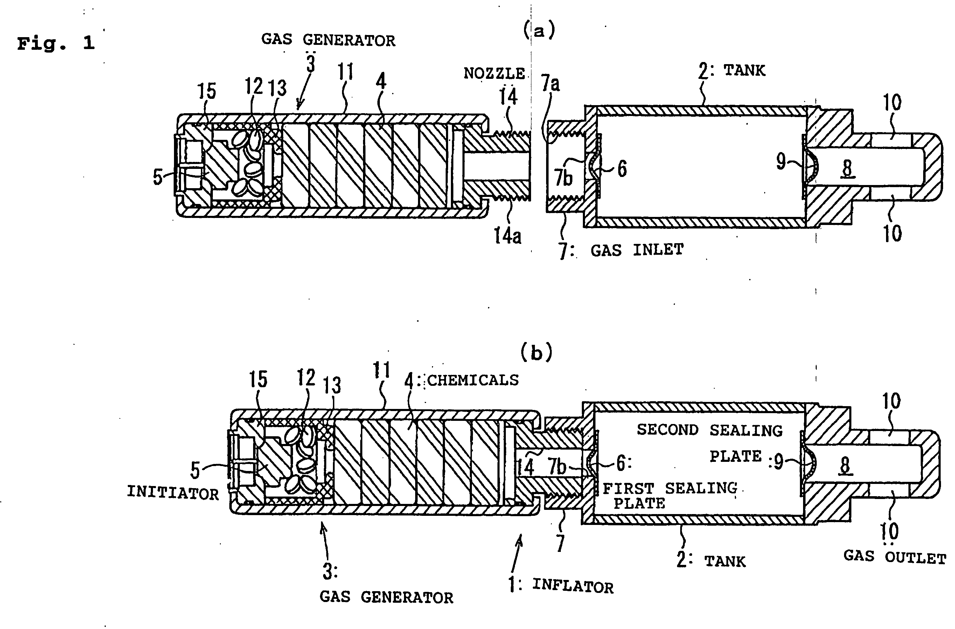

Fig. 1 is a longitudinal sectional view, of an inflator according to a first embodiment not part of the invention. Fig. 1(a) illustrates a state in which a gas generator and a tank are not yet coupled to each other, and Fig. 1(b) illustrates a state in which the gas generator and the tank are coupled to each other.

An inflator 1 comprises a substantially cylindrical tank 2; a gas generator 3 that contains chemicals 4 and an initiator 5 etc. and is fixed to one end of the tank 2; a first sealing plate 6 that separates the interior of the gas generator 3, and a gas inlet 7 at one end of the tank 2; and a second sealing plate 9 that separates the other end of the tank 2 and a guide hole 8 extending to a gas outlet 10.

The tank 2 is made of a copper material etc. and contains a gas, for example, about 10,000 to 70,000 kPa of nitrogen, argon or helium. A cylindrical gas inlet 7 protrudes from one end of the tank 2. A female screw 7a is formed on the inner circumferential face of the gas inlet 7 as a coupling mechanism. A communicating hole 7b that communicates the gas inlet 7 with the interior of the tank 2 is sealed by the first sealing plate 6.

The sealing plate 6 is made from, for example, a stainless sheet, etc. and is fixed to the inner face of the tank 2 by welding, etc. A substantially hemispheric bulging portion that enters the communicating hole 7b is provided on the first sealing plate 6 to endure the pressure of pressure from the interior of the tank 2.

The other end of the tank 2 is provided with a guide hole 8, and a gas outlet 10 is disposed at the end of the guide hole 8. The second sealing plate 9 is provided so as to seal an inlet end of the guide hole 8. A substantially hemispheric bulging portion provided on the second sealing plate 9 enters the guide hole 8. The second sealing plate 9 is fixed to the circumferential edge of the inlet end of the guide hole 8 by welding, etc.

Although not shown, a filter may be provided in the guide hole 8 to collect reaction residues of the chemicals 4, etc.

The gas generator 3 comprises a cylindrical casing 11; gas-generating chemicals 4 contained in the casing 11; the initiator 5 and igniting chemicals 12 for igniting the chemicals 4; and a filter element 13 composed of meshes placed between the chemical 12 and the chemicals 4.

The igniting chemicals and ignition means such as an resistance heating element for igniting the igniting chemicals are provided in the initiator 5, in which a power is supplied to the ignition means to make the igniting chemicals react to generate a high-temperature gas. The initiator 5 is held at the rear end in the casing 11 via an initiator holder 15.

A gas-outflow nozzle 14 protrudes from the front end of the casing 11. A male screw 14a is formed on the outer circumferential face of the nozzle 14 as the coupling mechanism.

In the present embodiment, a gas having a prescribed level of pressure is previously charged in the tank 2. The inflator 1 can be assembled by screwing the nozzle 14 of the gas generator 3 to the gas inlet 7 of the tank 2 to couple the gas generator 3 with the tank 2. The inner hole of the nozzle 14 extends to the communicating hole 7b linearly.

The operation of the inflator constructed as described above is as follows.

When a power is supplied to the initiator 5, the initiator 5 generates a high-temperature gas, and the igniting chemicals 12 start to react by the high-temperature gas, and the chemicals 4 generate a large amount of reaction gas when the gas comes in contact with the chemicals 4. The reaction gas pressure ruptures the first sealing plate 6 and flow into the tank 2. Then, the increased gas pressure in the tank 2 ruptures the second sealing plate 9, and the gas is released from the guide hole 8 via the gas outlets 10. Then, the gas rapidly expands the airbag.

In the inflator 1 of the figure 1, the gas generator 3 and the tank 2 are coupled by screwing the nozzle 14 having the male screw 14a to the gas inlet 7 having the female screw 7a, and welding is not employed in coupling both the nozzle and gas inlet. Therefore, the assembling operation of the inflator 1 becomes easy, and the manufacturing cost can be decreased. In addition, an inflator having various output characteristics (gas pressure or gas-generating duration etc.) can be assembled by preparing plural types of tanks 2 having different gas pressures or capacities and plural types of gas generators 3 having different characteristics such as gas-generating amount, pressure, and gas temperature, and by changing the combinations thereof. Since the gas is previously charged in the tank 2, the gas-charging facility is not required in the assembling process of an inflator, and the assembling cost of the inflator can be decreased.

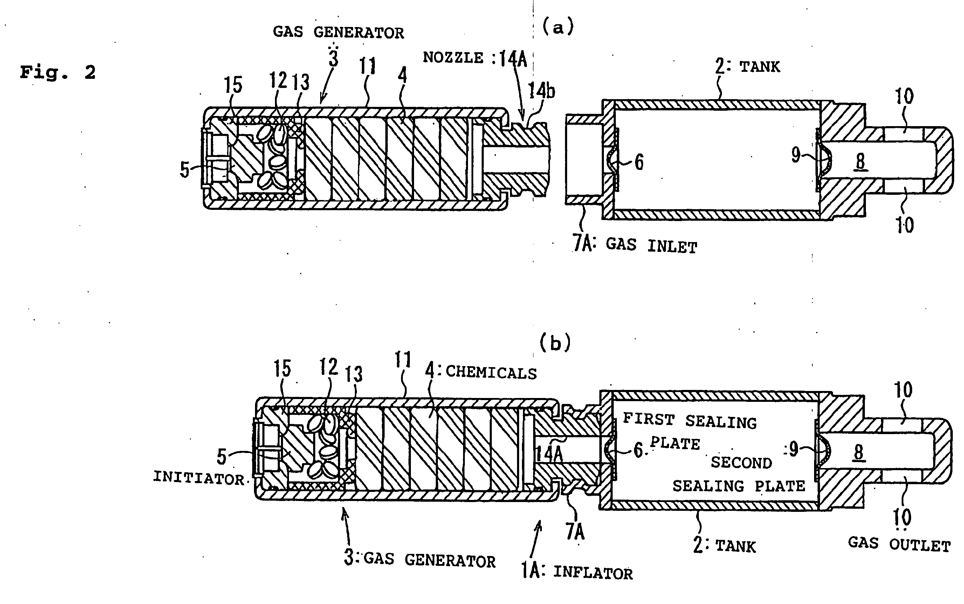

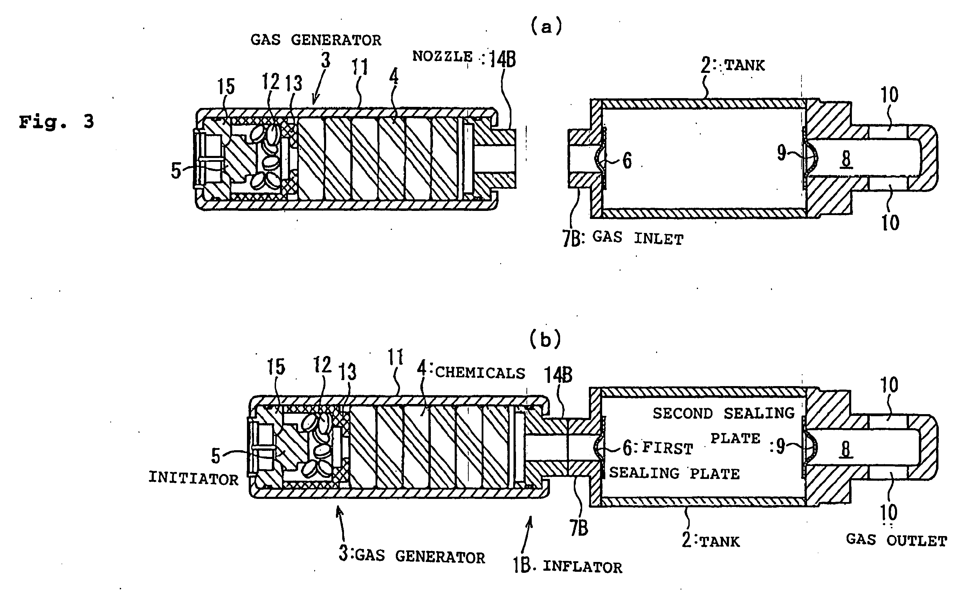

Figs. 2 and 3 illustrate other configurations of inflators 1A and 1B, in which (a) illustrates a state in which the gas generator and the tank are not yet coupled to each other, and (b) illustrates a state in which the gas generator and the tank are coupled to each other.

In the inflator 1A of Fig. 2 which is not part of the invention, instead of a male screw, recessed thread 14b is formed on the outer circumferential face of the nozzle 14A of the gas generator. In addition, no female screw exists on the inner circumferential face of the gas inlet 7A of the tank 2. The gas generator 3 and the tank 2 are coupled to each other by inserting the nozzle 14A into the gas inlet 7A, and then caulking-transforming the gas inlet 7A, thereby constructing the inflator 1A.

The other components of the inflator 1A are the same as those in Fig. 1, and thus the same reference numerals indicate the same components. The inflator 1A also has the same effect as that of the above-described inflator 1.

In an inflator 1B in Fig. 3, a front end face of a nozzle 14B of a gas generator butts a front end face of a gas inlet 7B, and the nozzle 14B and the gas inlet 7B are welded to each other. As a welding method, the electron beam welding is preferable, but electric welding such as laser welding or MIG welding may be employed. The other components of the inflator 1B are the same as those in Figs. 1 to 2, and thus the same reference numerals denotes the same components.

In the inflator 1B, welding is employed, but the nozzle 14B protrudes forward. Thus, the distance from the welded part (the front end of the nozzle 14B) to the chemicals 4 is long, and the reaction of the chemicals due to the welding heat does not occur. Therefore, the manufacture of the inflator 1B is easy. In addition, the present embodiment also employs a construction in which the gas is previously charged in the tank 2. Thus, many kinds of inflators can be provided by combining various types of tanks and gas generators. Further, a gas-charging facility is not required in the assembling process of an inflator, and thus the assembling cost of the inflator can be decreased.

The above-described inflators are just examples. For example, in Figs. 1 to 2, the nozzles 14 and 14A are inserted into the gas inlets 7 and 7A, then are screwed or caulked thereto. However, contrary to this, the gas inlet may be inserted into the nozzle and be screwed or caulked thereto.

The inflator of the present invention can be applied to various kinds of airbag apparatuses, such as those for a front passenger, a head-protection, a shoulder-protection and a driver.

## Claims

1. A hybrid inflator constructed by coupling a tank (2) charged with a pressurized gas and a gas generator (3) containing gas-generating chemicals (4),
wherein a coupling mechanism is provided in each of the tank (2) and the gas generator (3), and the tank (2) and the gas generator (3) are coupled to each other by the coupling mechanism, **characterised in that**
a gas-discharging nozzle (14B) protrudes toward the tank (2) from the gas generator (3), and a front end of the nozzle (14B) is coupled to the tank (2) by welding.

2. The inflator according to Claim 1,
wherein the tank includes a gas outlet (10) and a gas inlet (7) from the gas generator, and the inside of the tank is separated from the gas outlet and the gas inlet by a sealing member (6, 9), and the gas generator and the tank previously charged with the gas are coupled to each other.

3. An airbag apparatus comprising:
an airbag, and
an inflator according to Claims 1 or 2 that expands the airbag.

## Patentansprüche

1. Hybrid-Gasgenerator, der durch Koppeln eines mit einem Druckgas gefüllten Behälters (2) und eines gaserzeugende Chemikalien (4) enthaltenden Gasgenerators (3) aufgebaut ist,
wobei ein Koppelmechanismus jeweils im Behälter (2) und im Gasgenerator (3) vorgesehen ist und der Behälter (2) und der Gasgenerator (3) durch den Koppelmechanismus miteinander gekoppelt sind, **dadurch gekennzeichnet, daß** eine Gasabgabedüse (14B) vom Gasgenerator (3) zum Behälter (2) vorsteht und ein vorderes Ende der Düse (14B) mit dem Behälter (2) durch Schweißen verbunden ist.

2. Hybrid-Gasgenerator nach Anspruch 1,
wobei der Behälter einen Gasauslaß (10) und einen Gaseinlaß (7) vom Gasgenerator aufweist und das Innere des Behälters vom Gasauslaß und Gaseinlaß durch ein Dichtungsteil (6, 9) getrennt ist und der Gasgenerator und der vorab mit dem Gas gefüllte Behälter' miteinander gekoppelt sind.

3. Airbagvorrichtung mit:
einem Airbag und
einem Hybrid-Gasgenerator nach Anspruch 1 oder 2, der den Airbag expandiert.

## Revendications

1. Gonfleur hybride construit en couplant un réservoir (2) chargé avec un gaz sous pression et un générateur de gaz (3) contenant des produits chimiques de génération de gaz (4),
dans lequel un mécanisme de couplage est prévu dans chacun parmi le réservoir (2) et le générateur de gaz (3), et le réservoir (2) et le générateur de gaz (3) sont couplés entre eux par le mécanisme de couplage, **caractérisé en ce que** :
une buse de décharge de gaz (14B) fait saillie vers le réservoir (2) à partir du générateur de gaz (3), et une extrémité avant de la buse (14B) est couplée au réservoir (2) par soudage.

2. Gonfleur selon la revendication 1, dans lequel le réservoir comprend une sortie de gaz (10) et une entrée de gaz (7) du générateur de gaz, et l'intérieur du réservoir est séparé de la sortie de gaz et de l'entrée de gaz par un élément d'étanchéité (6, 9) et le générateur de gaz, et le réservoir préalablement chargé avec le gaz, sont couplés entre eux.

3. Dispositif de coussin de sécurité gonflable comprenant :
◆ un coussin de sécurité gonflable, et
◆ un gonfleur selon la revendication 1 ou 2 qui dilate le coussin de sécurité gonflable.
